# EUROPEAN PATENT APPLICATION

(11) **EP 2 058 920 A2**
(43) Date of publication of application: **13.05.2009**
(21) Application number: 08167492.1
(22) Date of filing: 24.10.2008
(51) Int. Cl.: H02J 7/14, H02J 1/14

(54) **Vehicle audio system power supply**

(30) Priority: 08.11.2007 US 983251
(71) Applicant: Delphi Technologies, Inc., Troy, Michigan 48007 (US)
(72) Inventor: Augustyn, Michael T., Kokomo, IN 46901 (US); Kinkead, Dennis L., Fishers, KY 46038 (US); Rhodes, B. Neal, Kokomo, IN 46901 (US)
(74) Representative: Denton, Michael John

(57) **Abstract**

A power supply circuit (10) for a vehicle audio system (18) supplies a regulated voltage to a control unit (28) through a series diode (46) and full battery voltage to a power amplifier (22) through a normally-off series power-FET (42). When the audio system (18) is activated, the control unit (28) turns on the series power-FET (42) to permit operation of the power amplifier (22). If the control unit (28) detects a sudden voltage drop or an engine crank signal (70), it prevents audible loudspeaker sounds by immediately turning off the series power-FET (42) and issuing a shut-down command to the power amplifier (22). If the battery voltage (12) is reversed, the series diode (46) isolates the control unit (28), and the series power-FET (42) remains off.

## Description

### TECHNICAL FIELD

The present invention relates to a vehicle audio system, and more particularly to a power supply circuit therefor.

### BACKGROUND OF THE INVENTION

The audio system in a motor vehicle is subject to various power fluctuations and irregularities that have the potential to damage the system circuitry and/or cause undesired system operation. For example, the system must be protected from reverse voltages that occur when the battery cables are incorrectly installed. And power fluctuations that produce audible loudspeaker sounds can occur with little or no warning. Accordingly, what is needed is a power supply arrangement that protects the audio system and eliminates undesired system operation.

### SUMMARY OF THE INVENTION

The present invention is directed to an improved power supply circuit for an audio system including a power amplifier that operates at full battery voltage and a control unit that operates at a lower regulated voltage. Battery voltage is supplied to the control unit voltage regulator through a series diode and to the power amplifier through a normally-off series power-FET. When the audio system is activated, the control unit turns on the series power-FET to permit operation of the power amplifier. If the control unit detects a sudden voltage drop or an engine crank signal, it prevents audible loudspeaker sounds by immediately turning off the series power-FET and issuing a shut-down command to the power amplifier. If the battery voltage is reversed, the series diode isolates the control unit, and the series power-FET remains off.

### BRIEF DESCRIPTION OF THE DRAWINGS

FIG. 1 is a diagram of a vehicle electrical system including an audio system having a microprocessor-based control unit and a power supply circuit according to this invention;

FIG. 2 is a flow diagram representing an operation of the control unit of FIG. 1 according to this invention.

### DESCRIPTION OF THE PREFERRED EMBODIMENT

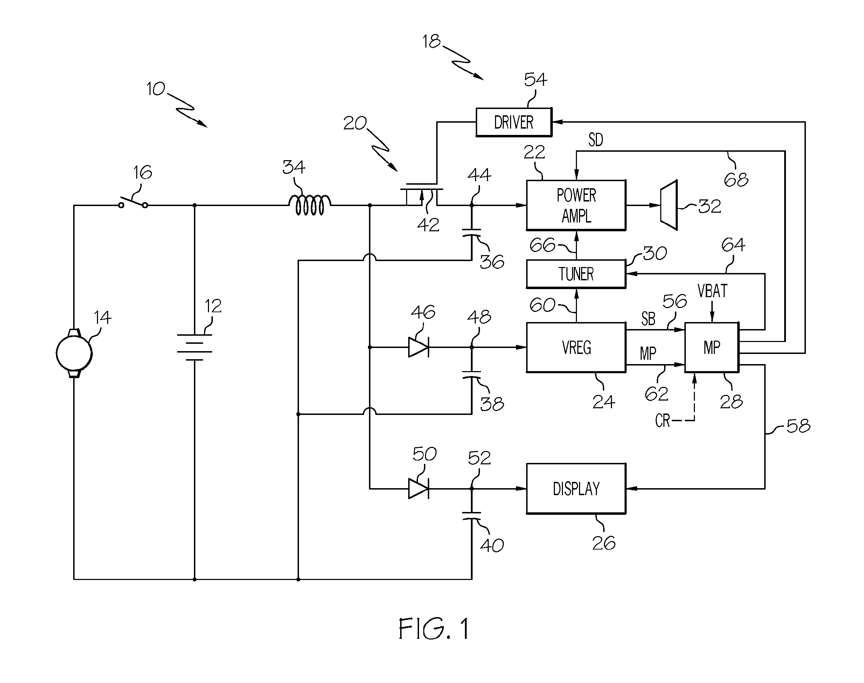

Referring to the drawings, and particularly to FIG. 1, the reference numeral 10 generally designates a portion of a vehicle electrical system, including a 12-volt storage battery 12, an engine starter motor 14, a start switch 16, and an audio system 18. The starter motor 14 and start switch 16 are depicted because closure of start switch 16 for engine cranking is typically the most severe load borne by battery 12, and produces a sudden and substantial drop in the voltage supplied to audio system 18 by battery 12.

The audio system 18 includes a power supply circuit 20, a power amplifier 22, a voltage regulator 24, a vacuum fluorescent (VF) display 26, a microprocessor-based control unit 28, a tuner 30, and one or more loudspeakers 32. The power supply circuit 20 supplies filtered battery voltage (i.e., 12-volts) to power amplifier 22, voltage regulator 24, and display 26; and voltage regulator 24 supplies a lower regulated voltage (5-volts, for example) to control unit 28 and tuner 30. Battery voltage filtering is achieved by the combination of series inductor 34 and the filter capacitors 36, 38 and 40. A power field-effect-transistor (FET) 42 couples the inductor 34 to filter capacitor 36 to provide a filtered 12-volt supply voltage for power amplifier 22 at terminal 44 when power FET 42 is conductive (on). A first power diode 46 couples inductor 34 to filter capacitor 38 to provide a filtered 12-volt supply voltage for voltage regulator 24 at terminal 48; and a second power diode 50 couples inductor 34 to filter capacitor 40 to provide a filtered 12-volt supply voltage for display 26 at terminal 52.

The power FET 42 is a normally-off device, and control unit 28 selectively biases FET 42 on through driver circuit 54 to provide a low-resistance circuit path between inductor 34 and terminal 44. In this way, power amplifier 22 can be electrically isolated from storage battery 12 when the audio system 18 is not activated and when the battery voltage suddenly drops, due to activation of starter motor 14 for example. In the case of a sudden drop in battery voltage, isolating terminal 44 from storage battery 12 prevents filter capacitor 36 from discharging through the starter motor 14, and provides sufficient reserve energy to enable power amplifier 22 to carry out its power-down function. The first power diode 46 and filter capacitor 38 perform a similar function for voltage regulator 24, as do the second power diode 50 and filter capacitor 40 for display 26. Theoretically, of course, a third power diode could be used in place of the FET 42, but the voltage drop across FET 42 is much less than the voltage drop across a forward-biased diode, so that substantially full battery voltage is available to power amplifier 22 at terminal 44 during operation of the audio system 18. Additionally, the maximum current requirement of power amplifier 22 would produce significantly higher heat dissipation in a diode than in FET 42 due to its low on-resistance. On the other hand, the input voltage and current requirements of voltage regulator 24 and display 26 are substantially less than that of power amplifier 22, so that the forward voltage drops and heat dissipation of diodes 46 and 48 do not pose significant design considerations. Additionally, FETs could theoretically be used in place of the second and third power diodes 46 and 50, but the power diodes 46 and 50 function adequately at a substantially lower cost.

In some cases, the power diode 50 may be omitted to reduce the power supply cost, particularly in applications where it is not important for the VF display 26 to be operative during engine cranking. Also, if a liquid-crystal-diode (LCD) display is used in place of the VF display 26, it can be powered by the voltage regulator 24; in this case, the second power diode 50 and capacitor 40 can be omitted.

The audio system 18 operates in one of two modes depending on the state of the vehicle ignition switch (not shown). When the ignition switch is off, voltage regulator 24 supplies control unit 28 a low current stand-by operating voltage (SB) on line 56, sufficient to supply time-of-day data to display 26 via line 58. In the stand-by mode, the other functions of audio system 18 are inactive, and the power FET 42 remains in its normal off state. Reverse battery voltage occurring during the stand-by mode is isolated from power amplifier 22 by FET 42, and from voltage regulator 24 and display 26 by the first and second power diodes 46 and 50, respectively. When the ignition switch is on (run or accessory), voltage regulator 24 supplies operating voltage to tuner 30 via line 60, and main power (MP) to control unit 28 via line 62, to transition from the stand-by mode to the on mode. If the audio system 18 is activated, control unit 28 turns on FET 42 via driver 54, sends a frequency signal to tuner 30 via line 64 if appropriate, and suitably activates display 26 via line 58. The tuner output is supplied to power amplifier 22 via line 66, and power amplifier 22 drives the loudspeakers 32 accordingly. When a shut-down (SD) function is desired, control unit 28 issues a "Shut-Down" command to power amplifier 22 via line 68 to activate muting and power-down functions.

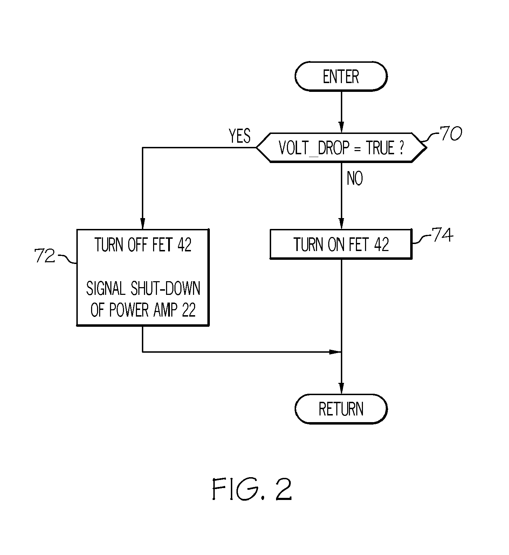

The flow diagram of FIG. 2 represents a software routine periodically executed by control unit 28 during the on mode of audio system 18. The battery terminal voltage VBAT (or a signal ratiometrically related to VBAT) is supplied to an A/D input port of control unit 28, and block 70 of the flow diagram depicted in FIG. 2 monitors the input signal to detect a sudden negative-going voltage transition such as can occur when the starter motor 14 is activated. If the voltage drop condition is detected, block 70 is answered in the affirmative and block 72 is executed to turn off FET 42, and to signal power amplifier 22 to activate the Shut-Down function. As mentioned above the filter capacitor 36 provides sufficient reserve energy to enable power amplifier 22 to respond by muting the audio output to loudspeakers 32 and performing a controlled power down. When the voltage drop condition is no longer True, block 70 is answered in the negative and block 74 is executed to turn on FET 42 to resume normal operation of audio system 18. Alternatively or additionally, a crank switch input (CR) may be supplied to control unit 28 as indicated in phantom in FIG. 1; when a state change of the CR input indicates closure of crank switch 16, block 72 is executed as described above to turn off FET 42 and command the shut-down of power amplifier 22.

In summary, the power supply circuit 20 provides a simple and cost-effective arrangement for protecting audio system 18 and eliminating undesired system operation due to supply voltage anomalies. While the invention has been described with respect to the illustrated embodiment, it is recognized that numerous modifications and variations in addition to those mentioned herein will occur to those skilled in the art. Accordingly, it is intended that the invention not be limited to the disclosed embodiment, but that it have the full scope permitted by the language of the following claims.

## Claims

1. Apparatus for supplying power from a vehicle storage battery (12) to an audio system (18), comprising:
a power transistor (42) coupling said storage battery (12) to a first power supply terminal (44);
a power diode (46) coupling said storage battery (12) to a second power supply terminal (48);
first and second filter capacitors (36, 38) coupled to said first and second power supply terminals (44, 48), respectively;
an audio system power amplifier (22) coupled to said first power supply terminal (44) for driving an audio system loudspeaker (32); and
an audio system controller (24, 28) coupled to said second power supply terminal (48) for turning on said power transistor (42) during an on-mode of said audio system (18) and selectively turning off said power transistor (42) to electrically isolate said storage battery (12) from said audio system power amplifier (22) when a sudden voltage drop of said storage battery (12) is detected or anticipated.

2. The apparatus of claim 1, where:
said power transistor (42) is a low on-resistance power FET.

3. The apparatus of claim 1, where:
said audio system controller includes a voltage regulator (24) coupled to said second power supply terminal (48) and a microprocessor-based control unit (28) powered by an output voltage of said voltage regulator (24).

4. The apparatus of claim 3, where:
said control unit (28) turns off said power transistor (42, 72) in response to a detected sudden voltage drop of said storage battery (12, 70).

5. The apparatus of claim 3, including a starter switch (16) for activating an electrical load (14) coupled to said storage battery (12), where:
said control unit (28) turns off said power transistor (42) in response to a detected closure (CR) of said starter switch (16).

6. The apparatus of claim 1, where:
said audio system controller (24, 28)commands a shut-down of said audio system power amplifier (22) when the sudden voltage drop of said storage battery (12) is detected or anticipated (72).
